# EUROPÄISCHE PATENTSCHRIFT

(11) **EP 3 080 791 B1**
(45) Veröffentlichungstag und Bekanntmachung des Hinweises auf die Patenterteilung: **19.06.2019**
(21) Anmeldenummer: 14809395.8
(22) Anmeldetag: 09.12.2014
(51) Int. Cl.: G08B 25/00, H04W 4/02, H04W 4/90

(54) **VERFAHREN ZUM BETREIBEN EINES NOTRUFSYSTEMS, NOTRUFSYSTEM**
METHOD FOR OPERATING AN EMERGENCY CALL SYSTEM, EMERGENCY CALL SYSTEM
PROCÉDÉ D'EXPLOITATION D'UN SYSTÈME D'APPEL D'URGENCE, SYSTÈME D'APPEL D'URGENCE

(30) Priorität: 09.12.2013 DE 102013225325
(43) Veröffentlichungstag der Anmeldung: 19.10.2016
(73) Patentinhaber: Vasic, Milan, 78056 Villingen-Schwenningen (DE)
(72) Erfinder: Vasic, Milan, 78056 Villingen-Schwenningen (DE)
(74) Vertreter: Clarenbach, Carl-Philipp
(86) Internationale Anmeldenummer: PCT/EP2014/077016
(87) Internationale Veröffentlichungsnummer: WO 2015/086581

(56) Entgegenhaltungen:
- WO-A1-01/78032
- US-A1- 2005 136 845

## Beschreibung

Die Erfindung betrifft ein Verfahren zum Betreiben eines Notrufsystems, das mindestens ein Mobilgerät mit mindestens einem Funkmodul zum Aussenden eines Notrufs sowie eine Vielzahl von Empfangsstationen mit mindestens jeweils einem Funkmodul zum Empfangen des Notrufs aufweist.

Ferner betrifft die Erfindung ein Notrufsystem, insbesondere zur Durchführung des Verfahrens, mit mindestens einem Mobilgerät mit mindestens einem Funkmodul zum Aussenden eines Notrufs und mit einer Vielzahl von Empfangsstationen mit mindestens jeweils einem Funkmodul zum Empfangen des Notrufs.

### Stand der Technik

Aus dem Stand der sind eine Vielzahl unterschiedlicher Notrufsysteme bekannt, die einen Notruf über ein Funknetzwerk übertragen. So offenbart beispielsweise das deutsche Gebrauchsmuster DE 296 19 164 U1 ein Notrufsystem, das eine Vielzahl installierter Empfangsstationen unterhält. Das Dokument US2005/0136845 beschreibt ein weiteres Beispiel eines Notrufsystems. Durch ein Mobilgerät, wie beispielsweise eine Uhr oder ein Pager, lässt sich ein Notruf absetzen, der von einer Empfangsstation erfasst und an eine Notrufzentrale weitergeleitet wird. Dadurch kann beispielsweise einer verunglückten Person schnell Hilfe in Form eines ausgesandten Notarztwagens oder dergleichen geleistet werden. Dieses System ist jedoch ungeeignet für Notfälle, in welchen sich der Benutzer des Mobilgeräts in einer Gefahrensituation befindet, die beispielsweise durch eine andere Person verursacht wird. Auch muss der Benutzer auf das Eintreffen der angeforderten Hilfe warten. Auch wenn der Benutzer des Mobilgeräts durch eine andere Person bedroht wird, hilft der durch das Notrufsystem erzeugte Notruf nicht sofort, da dieser zunächst an die Notrufzentrale weitergeleitet werden und die Notrufzentrale einen Polizeibeamten oder Dergleichen zu der Position des Nutrufenden senden muss.

In Gefahrensituationen eignet sich daher besser ein System, wie es beispielsweise in der DE 10 2006 032 485 A1 offenbart ist. Dort wird vorgeschlagen, dass ein Notrufsender ein Signal an mehrere in Kraftfahrzeugen integrierte Empfangsstationen aussenden kann, wobei die Empfangsstationen als Reaktion auf das Alarmsignal zum einen den Notruf an eine Zentrale weiterleiten, und zum anderen als Alarmsignal Ton- oder Lichtsignale durch die Fahrzeugelektronik aussenden, um Aufmerksamkeit zu erregen und beispielsweise einen Täter zu vertreiben. Sind mehrere Fahrzeuge mit entsprechender Ausstattung in der näheren Umgebung, so wird jedoch bei allen dieser Fahrzeuge der Alarm ausgelöst, was ein eindeutiges Identifizieren der Stelle, an welcher sich der Benutzer des Mobilgeräts befindet, erschwert.

Aus der Offenlegungsschrift US 2013/0057401 A1 ist außerdem ein Notrufsystem bekannt, bei welchem ein Funkmodul zusammen mit einer Alarmeinrichtung als eine Einheit bereitgestellt werden. Dabei ist vorgesehen, dass, wenn ein Alarm ausgelöst wird, einerseits die Alarmeinrichtung ein Alarmsignal erzeugt und andererseits das Funkmodul aktiviert wird, um Strukturdaten, beispielsweise bezüglich des Gebäudes, in welchem die Einheit vorgesehen ist, zu versenden, damit im Notfall Hilfskräfte schnell Informationen über das Gebäude erhalten können. Hierbei wird der Alarm jedoch manuell direkt in der Einheit ausgelöst, bevor eine Funkverbindung möglich ist.

### Aufgabe der Erfindung

Der Erfindung liegt die Aufgabe zugrunde, ein Notrufsystem zu schaffen, das in einer Gefahrensituation dem Benutzer schnellstmöglich hilft, indem es insbesondere durch das gezielte Erzeugen eines Alarmsignals die Aufmerksamkeit auf den Benutzer lenkt.

### Offenbarung der Erfindung

Die der Erfindung zugrunde liegende Aufgabe wird durch ein Verfahren mit den Merkmalen des Anspruchs 1 sowie durch ein Notrufsystem mit den Merkmalen des Anspruchs 14 gelöst.

Das erfindungsgemäße Verfahren hat den Vorteil, dass durch das ausgelöste Alarmsignal die Aufmerksamkeit von dritten Personen gezielt auf den Benutzer des Mobilgeräts gelenkt wird. Dabei kann der Alarm auch von einer Person ausgelöst werden, die nicht unmittelbar der Gefahr ausgesetzt ist, jedoch auf die Gefahr bezüglich einer anderen Person aufmerksam machen möchte, ohne sich selbst zu offenbaren und dadurch gegebenenfalls der Gefahr auszusetzen.

Das erfindungsgemäße Verfahren sieht vor, dass jede Empfangsstation eine Alarmeinrichtung zum Ausgeben eines Alarmsignals aufweist, und dass das Mobilgerät zum Auslösen eines Alarms einen Notruf an eine erste, insbesondere nur eine erste der Empfangsstationen sendet, wobei eine Position des Mobilgeräts bezüglich der Empfangsstationen ermittelt und in Abhängigkeit von der ermittelten Position nur eine der Empfangsstationen zum Ausgeben des Alarmsignals durch die jeweilige Alarmeinrichtung ausgewählt wird. Es ist also vorgesehen, dass eine Alarmeinrichtung nur einer Empfangsstation das Alarmsignal ausgibt. Diese Empfangsstation wird in Abhängigkeit von der Position des Mobilgeräts bezüglich der Empfangsstationen ausgewählt, so dass insbesondere die für den Zweck am besten geeignete Empfangsstation das Alarmsignal erzeugt. Durch die in Abhängigkeit der ermittelten Position ausgewählte Empfangsstation wird erreicht, dass der Alarm beziehungsweise das Alarmsignal derart erzeugt wird, dass die Aufmerksamkeit dritter Personen nicht durch weitere Alarmsignale irritiert werden und schneller die tatsächliche Position des Notrufgebers erfasst werden kann.

Bevorzugt ist vorgesehen, dass das Notrufsystem flächendeckend ausgebildet ist. Dazu sind auf einem vorgegebenen Gebiet die Empfangsstationen des Notrufsystems derart verteilt angeordnet, dass egal wo sich das Mobilgerät in dem Gebiet befindet, ein Notruf stets zumindest zu einer der Empfangsstationen gesendet werden kann. Weiterhin ist besonders bevorzugt vorgesehen, dass die erste Empfangsstation, die den Notruf erhalten hat, diesen unmittelbar an eine Zentrale beziehungsweise an einen Zentralserver weiterleitet. Dazu sind die Empfangsstationen zweckmäßigerweise kabellos oder kabelgebunden an ein lokales Netzwerk (LAN) angeschlossen, in welchem sich auch der Zentralserver befindet.

Gemäß einer vorteilhaften Weiterbildung der Erfindung ist vorgesehen, dass das Mobilgerät insbesondere mittels seines Funkmoduls Signalstärken der Funkmodule der Empfangsstationen ermittelt und der Empfangsstation den Notruf zusendet, deren Funkmodul die größte Signalstärke aufweist. Wird das Mobilgerät also zum Aussenden eines Notrufs betätigt, so werden zunächst Signalstärken der zur Verfügung stehenden Empfangsstationen erfasst. Dazu scannt beziehungsweise tastet das Mobilgerät seine Umgebung ab und wertet die erfassten Daten entsprechend aus. Dadurch, dass das Mobilgerät den Notruf an die Empfangsstation mit der größten Signalstärke zusendet, wird gewährleistet, dass der Notruf sicher und schnell an die wahrscheinlich am günstigsten gelegene Empfangsstation gesendet wird. In der Regel kann nämlich davon ausgegangen werden, dass die Empfangsstation mit der höchsten Signalstärke die Empfangsstation ist, die am nächsten zu dem Mobilgerät angeordnet ist.

Ferner ist bevorzugt vorgesehen, dass die den Notruf empfangende erste Empfangsstation eine Signalstärke des Funkmoduls des Mobilgeräts erfasst und in Abhängigkeit von der Signalstärke die Position des Mobilgeräts bestimmt. Es wird dabei davon ausgegangen, dass die Sendeleistung des Funkmoduls des Mobilgeräts grundsätzlich bekannt ist. Entsprechend ist es der Empfangsstation möglich, in Abhängigkeit der erfassten Signalstärke zumindest die Entfernung des Mobilgeräts zu der jeweiligen Empfangsstation zu ermitteln. Weist die Empfangsstation bevorzugt außerdem eine entsprechende Richtcharakteristik ihres Funkmoduls auf, so lässt sich die Position des Mobilgeräts bezüglich der Empfangsstation hinreichend genau bestimmen. Alternativ oder zusätzlich ist bevorzugt vorgesehen, dass die Position des Mobilgeräts durch Triangulation ermittelt wird. Dazu kommuniziert die erste Empfangsstation mit benachbarten Empfangsstationen, die ebenfalls in der Reichweite des Mobilgeräts liegen und dessen Signalstärke erfassen können. Durch Kenntnis der Anordnung der Empfangsstationen bezüglich der ersten Empfangsstation lässt sich dadurch per Triangulation die Position des Mobilgeräts hinreichend genau feststellen. Sind nur zwei Empfangsstationen im Wirkungsbereich des Mobilgeräts angeordnet, so kann mittels diesen beiden eine ausreichend hohe Positionsgenauigkeit erreicht werden. Bei einem derartigen Vorgehen kann insbesondere auf eine kostenintensive Richtcharakteristik des Funkmoduls der Empfangsstationen verzichtet werden.

Alternativ ist bevorzugt vorgesehen, dass das Mobilgerät der ersten Empfangsstation die erfassten Signalstärken aller erfassten Empfangsstationen mit dem Notruf sendet, wobei in Abhängigkeit dieser Signalstärken die erste Empfangsstation die Position des Mobilgeräts bestimmt. Hier findet also die Berechnung beziehungsweise Ermittlung der Position des Mobilgeräts in Abhängigkeit der Signalstärken durch die Empfangsstation statt, welcher die Signalstärken der benachbarten Empfangsstationen, die ebenfalls von dem Mobilgerät erfasst wurden, mitgeteilt bekommt. Dadurch stehen der ersten Empfangsstation alle Informationen zu Verfügung, um die Position des Mobilgeräts zu bestimmen.

Gemäß einer bevorzugten Ausführungsform der Erfindung ist weiterhin vorgesehen, dass die erfassten Signalstärken durch die erste Empfangsstation mit einer oder mehreren Referenzsignalstärken verglichen werden, wobei die erste Empfangsstation das Alarmsignal nur dann durch die Alarmeinrichtung auslöst, wenn die erfasste Signalstärken einer oder mehreren der Referenzsignalstärken entspricht. Zur schnelleren Ortung des Mobilgeräts ist hierbei also vorgesehen, dass die Position des Mobilgeräts nicht berechnet, sondern durch Datenvergleich ermittelt wird. Hierzu werden beispielsweise die Referenzsignalstärken zuvor in einem Speicher der jeweiligen Empfangsstation hinterlegt, beispielsweise in einer Kennlinie oder in einem Kennfeld. In Abhängigkeit von einer erfassten Signalstärke kann dann schnell auf eine entsprechende Position geschlossen werden.

Vorzugsweise werden die Referenzsignalstärken bei der Einrichtung des Notrufsystems individuell für die jeweilige Empfangsstation bestimmt, indem ein Referenzmobilgerät Testsignale beziehungsweise Testnotrufe an unterschiedlichen Positionen bezüglich einer oder mehrerer der Empfangsstationen aussendet, bei bekannter Position des Mobilgeräts zu der Empfangsstation. Entsprechend wird dann die jeweils erfasste Referenzsignalstärke zusammen mit der bekannten Position in der jeweiligen Empfangsstation oder in einem mit den Empfangsstationen verbundenen Zentralserver zur späteren Verwendung gespeichert. Weiterhin ist bevorzugt vorgesehen, dass zum Einrichten des Notrufsystems an unterschiedlichen Positionen eine durch die Empfangsstationen jeweils erfasste Referenzsignalstärke des Referenzmobilgeräts zusammen mit durch ein globales Navigationssatellitensystem ermittelten Positionsdaten des Referenzmobilgeräts gespeichert werden. Durch das Berücksichtigen globaler Navigationssatellitensystemdaten lässt sich auch die Position des Mobilgeräts in einer digitalen Karte, beispielsweise durch Angaben bezüglich Längengrad und Breitengrad, darstellen beziehungsweise bestimmen. Dadurch kann durch Erfassen der Signalstärken und Vergleich mit den Referenzsignalstärken die Position des Mobilgeräts sehr genau ermittelt werden. Vorzugsweise werden die Referenzsignalstärken in Referenzsignalstärkebereiche zusammengefasst oder aufgeteilt, und bei Erfassen eines Notrufs die erfassten Signalstärken mit den Referenzsignalstärkebereichen verglichen, um die Position des Mobilgeräts zu ermitteln.

Vorzugsweise leitet die erste Empfangsstation nach Empfangen des Notrufs zumindest den Notruf, eine Kennung des Mobilgeräts sowie die Position der ersten Empfangsstation und/oder des Mobilgeräts an den Zentralserver weiter. Es ist also vorgesehen, dass bevorzugt der Notruf an einen Zentralserver beziehungsweise an eine Zentrale weitergeleitet wird, welche die Daten beispielsweise an den Sicherheitsdienst oder an die Polizeibehörde weiterleitet, zumindest, wenn es sich um einen Notruf durch einen berechtigten Benutzer handelt. Wurde die Position des Mobilgeräts wie oben beschrieben ermittelt, kann somit durch die Notrufzentrale auch gleichzeitig eine genaue Position des Notrufenden weitergeleitet werden. Zweckmäßigerweise wird der Notruf unmittelbar nach Empfang durch die erste Empfangsstation an den Zentralserver weitergeleitet, während gegebenenfalls parallel dazu die erste Empfangsstation ermittelt, ob sie oder gegebenenfalls eine der benachbarten Empfangsstationen das Alarmsignal ausgeben soll.

Gemäß einer vorteilhaften Weiterbildung der Erfindung ist vorgesehen, dass bevorzugt zum Einrichten des Notrufsystems bei der Ermittlung der Referenzsignalstärken in Abhängigkeit der Position des Mobilgeräts eine von mehreren in Reichweiten befindliche Empfangsstation zum Auslösen des Alarmsignals vorausgewählt wird. Wenn, wie zuvor beschrieben, das Notrufsystems mittels des Referenzmobilgeräts eingerichtet wird, ist also vorgesehen, dass eine der Empfangsstationen in Abhängigkeit von der jeweiligen Position des Mobilgeräts beziehungsweise des Referenzmobilgeräts vorausgewählt wird, um ein Alarmsignal dann auszulösen, wenn sich ein entsprechendes Mobilgerät an der entsprechenden Position befindet und einen Notruf aussendet. Hierdurch wird erreicht, dass nicht unbedingt die Empfangsstation mit der höchsten Signalstärke das Alarmsignal erzeugt/ausgibt, sondern die Empfangsstation, die für den jeweiligen Fall am besten geeignet ist. Dies ist beispielsweise dann von Bedeutung, wenn die erste Empfangsstation zwar näher zu dem Mobilgerät ist, sich jedoch hinter einer Wand oder dergleichen befindet, während eine zweite Empfangsstation, die etwas weiter entfernt ist, im Sichtbereich des Mobilgeräts beziehungsweise des Benutzers des Mobilgeräts liegt und dadurch besser geeignet wäre, den Alarm auszulösen.

Gemäß einer weiteren bevorzugten Ausführungsform der Erfindung ist vorgesehen, dass beim Einrichten des Notrufsystems in den Empfangsstationen Positionsdaten benachbarter Empfangsstationen gespeichert werden, wobei die erste Empfangsstation in Abhängigkeit der Position des Mobilgeräts selbst das Alarmsignal auslöst oder eine benachbarte zweite Empfangsstation beauftragt, das Alarmsignal auszulösen, wenn die zweite Empfangsstation näher zu der erfassten Position des Mobilgeräts ist als die erste Empfangsstation oder, wenn die zweite Empfangsstation die vorausgewählte Empfangsstation ist. Bevorzugt kommunizieren also die Empfangsstationen auch untereinander. Wird der Notruf an die erste Empfangsstation übermittelt, entscheidet diese, ob sie selbst den Alarm auslöst, oder den Notruf an eine zweite Empfangsstation weiterleitet, falls diese aufgrund der Position des Mobilgeräts besser dazu geeignet ist. Die Daten bezüglich der Positionen und/oder der Signalstärken beziehungsweise Referenzsignalstärken können sowohl in der jeweiligen Empfangsstation selbst als auch in dem Zentralserver zum Abruf bereitgestellt werden.

Vorteilhafterweise ist weiterhin bevorzugt vorgesehen, dass die Empfangsstationen mittels ihres jeweiligen Funkmoduls ihre Umgebung abtasten, um benachbarte Empfangsstationen zu erfassen und insbesondere zu bestätigen. Dadurch, dass die Empfangsstationen auch die Signalstärken benachbarter Empfangsstationen erfassen, kann insbesondere eine Sicherung des Notrufsystems insgesamt derart erreicht werden, dass das Entfernen einer Empfangsstation durch die verbleibenden Empfangsstationen registriert wird. Hierdurch kann beispielsweise ein Diebstahl einer Empfangsstation schnell erkannt oder auch verhindert werden.

Weiterhin ist bevorzugt vorgesehen, dass die Empfangsstation in Abhängigkeit von dem gesendeten Notruf einen stillen Alarm oder einen lauten Alarm auslöst. Das Mobilgerät ist dabei dazu ausgebildet, unterschiedliche Notrufe auszusenden, die entsprechend zu einem stillen Alarm oder zu einem lauten Alarm führen. Dazu weist das Mobilgerät zweckmäßigerweise wenigstens einen Notrufschalter auf, bei dessen Betätigung der Notruf ausgesendet wird. Dabei ist beispielsweise vorgesehen, dass bei einer einmaligen Betätigung ein Notruf zum Erzeugen eines lauten Alarmsignals und bei zweifacher Betätigung ein Notruf zum Erzeugen eines stillen Alarmsignals ausgelöst wird. Optional ist der Notrufschalter durch eine Sicherheitskappe oder dergleichen bedeckt, die vor Betätigung des Notrufschalters entfernt werden muss. Dadurch wird ein versehentliches Betätigen des Notrufschalters auf einfache Art und Weise verhindert. Bei Auslösen eines stilles Alarms werden insbesondere nur die Daten, wie die Benutzerkennung oder die Mobilgerätkennung sowie die erfasste Position des Mobilgeräts oder der ersten Empfangsstation an den Zentralserver weitergeleitet, ohne dass ein hörbares oder sichtbares Alarmsignal ausgelöst wird. Dadurch kann beispielsweise eine vorzeitige Eskalation einer gefährlichen Situation vor Eintreffen von Hilfskräften verhindert werden.

Zweckmäßigerweise wird daher mit dem Notruf durch das Mobilgerät eine Benutzerkennung oder eine Mobilgerätkennung an die erste Empfangsstation mitgesendet, die zur Identifizierung des Benutzers dienen. Dadurch kann der Notruf auch direkt einer Person zugeordnet werden. Insbesondere ist hierdurch möglich, die Berechtigung der Person, das Notrufsystem zu nutzen, zu prüfen.

Gemäß einer vorteilhaften Weiterbildung der Erfindung ist vorgesehen, dass das Mobilgerät ab dem Absenden des Notrufs eine Audioaufnahme startet und insbesondere Audiodatenpakete in regelmäßigen Abständen an die erste Empfangsstation und/oder eine weitere Empfangsstation sendet. Die Audioaufnahme ist dazu gedacht, die Situation zu dokumentieren und beispielsweise über die Empfangsstation der Zentrale mitzuteilen. Dadurch bleibt die Zentrale auf dem aktuellen Stand der Situation und kann zielgerichtete Hilfe leisten. Durch das bevorzugte Absenden von Audiopaketen in regelmäßigen Abständen wird erreicht, dass die Fehleranfälligkeit für größere Dateien, die versendet werden müssen, verringert wird. Durch das Zerstückeln der Aufnahme in einzelne Pakete wird die Sicherheit erhöht, dass die Zentrale die Audiodatei unbeschädigt und nutzbar erhält.

Ferner ist bevorzugt vorgesehen, dass ein Alarm nur dann ausgelöst wird, wenn die Benutzerkennung oder Mobilgerätekennung einer im Zentralserver oder in der ersten Empfangsstation hinterlegten autorisierten Benutzerkennung oder Mobilgerätekennung entspricht. Wie oben bereits erwähnt, wird hierdurch erreicht, dass eine Benutzung des Notrufsystems durch eine unautorisierte Person verhindert wird. Des Weiteren wird gewährleistet, dass der Notruf einer bestimmten Person zuordenbar ist, wodurch beispielsweise ein angekündigter Test des Notrufsystems durch einen Benutzer durchgeführt oder ein Missbrauch des Notrufsystems zwar nicht verhindert, jedoch nachverfolgbar ist.

Gemäß einer vorteilhaften Weiterbildung der Erfindung ist außerdem vorgesehen, dass, wenn das Mobilgerät sich in einer Umgebung befindet, in welcher die nächste Empfangsstation außerhalb seiner Funk-Reichweite liegt, der Notruf des Mobilgeräts also nicht von einer Empfangsstation empfangen werden kann, das Mobilgerät eine drahtlose Kommunikationsverbindung zu einem Mobiltelefon, dass sich in seiner Reichweite befindet, aufbaut, und dabei oder dadurch das Mobiltelefon ansteuert, einen Notruf an eine Zentrale automatisch über ein Mobilfunknetz, über welches das Mobiltelefon kommuniziert, zu starten. So ist insbesondere vorgesehen, dass das Mobilgerät, das per WLAN den Notruf an die Empfangsstation sendet, dann, wenn keine Empfangsstation sich in seiner Reichweite befindet, ein weiteres Funkmodul, das eine anders geartete drahtlose Kommunikation erlaubt, insbesondere ein Bluetooth-Modul, ansteuert, um den Notruf auf anderem drahtlosem Wege auszusenden. Ob ein Notruf erfolgreich an eine Empfangsstation gesendet wurde, kann beispielsweise durch eine Rückmeldung der Empfangsstation an das Mobilgerät bestätigt werden. Bleibt diese Bestätigung aus, nachdem das Mobilgerät den Notruf ausgesendet hat, so wechselt es seinen Betriebsmodus und steuert das andere Funkmodul, insbesondere das bereits genannte Bluetooth-Modul an, um den Notruf über ein anderen Kommunikationsnetz auszusenden. Alternativ sendet das Mobilgerät den Notruf mittels des bereits vorhandenen Funkmoduls an das Mobiltelefon. Vorzugsweise wird das Mobiltelefon des Benutzers, der auch das Mobilgerät mit sich führt, für eine entsprechende Verbindung, insbesondere Bluetooth Verbindung, mit dem Mobilgerät zuvor eingerichtet, sodass das Mobilgerät die Verbindung automatisch zu dem Mobiltelefon des Benutzers aufbaut und das Mobiltelefon des Benutzers den Notruf an die Zentrale aussendet. Dabei kann insbesondere vorgesehen sein, dass über diesen Notruf ebenfalls Positionsdaten, die durch das Mobiltelefon und/oder durch das Mobilgerät bereitgestellt werden, an die Zentrale weitergeleitet, um die zuvor bereits beschriebenen Vorteile und Möglichkeiten zu erreichen.

Das erfindungsgemäße Notrufsystem mit den Merkmalen des Anspruchs 14, das insbesondere als flächendeckendeckendes Notrufsystem ausgebildet ist, zeichnet sich dadurch aus, dass jede Empfangsstation eine Alarmeinrichtung sowie eine Steuereinheit aufweist, wobei die Alarmeinrichtung zum Ausgeben eines Alarmsignals ausgebildet ist, und wobei die Steuereinheit in Abhängigkeit von einer Signalstärke eine Position des Mobilgeräts ermittelt und in Abhängigkeit von der ermittelten Position das Alarmsignal auslöst. Es ergeben sich hierdurch die zuvor bereits genannten Vorteile. Das Notrufsystem ist dabei insbesondere dazu ausgebildet, das zuvor beschriebene Verfahren durchzuführen. Weitere Vorteile und Merkmale ergeben sich insbesondere aus dem zuvor Beschriebenen sowie aus den Ansprüchen.

Besonders bevorzugt ist vorgesehen, dass jede Empfangsstation als WLAN-Router ausgebildet ist. Entsprechend weist die Empfangsstation als Funkmodul ein WLAN-Modul auf, das zum Empfangen des Notrufs genutzt wird. Entsprechend weist das mindestens eine Mobilgerät ebenfalls als Funkmodul ein WLAN-Modul auf, um die Kommunikationsverbindung zu der Empfangsstation aufzubauen. Durch das Notrufsystem werden damit flächendeckend Router bereitgestellt, die auch zur Internetverbindung oder zur Bereitstellung von Informationen über WLAN genutzt werden können. Dadurch erfüllen die Router neben den Sicherheitsaspekten des Notrufsystems noch weitere Funktionen, die von Nutzern des Notrufsystems oder auch von Drittanbietern genutzt werden können. Gemäß einer alternativen Ausführungsform ist bevorzugt vorgesehen, dass die Funkmodule als Bluetoothmodule ausgebildet sind. Auch ist es denkbar, einen anderen bekannten Funkstandard zur Datenübertragung zu verwenden.

Im Folgenden soll die Erfindung anhand von Ausführungsbeispielen näher erläutert werden. Dazu zeigen:
- Figur 1: ein Notrufsystem in einer vereinfachten Darstellung,
- Figur 2: ein Mobilgerät des Notrufsystems,
- Figur 3: eine Empfangsstation des Notrufsystems,
- Figur 4: einen Ablaufplan zur Einrichtung und Nutzung des Notrufsystems und
- Figur 5: einen Ablaufplan zur Nutzung des Notrufsystems.

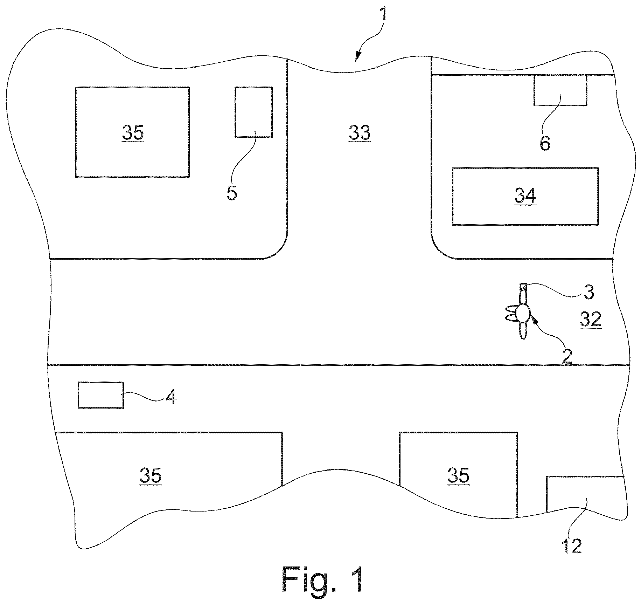

Figur 1 zeigt in einer vereinfachten Darstellung ein Notrufsystem 1, das insbesondere dazu dient, die Sicherheit von Benutzern des Notrufsystems 1 in Gefahrensituationen, wie beispielsweise bei einem Überfall, einem Unfall oder dergleichen, zu erhöhen. Dazu weist das Notrufsystem 1 ein Mobilgerät 3 auf, das der jeweilige Benutzer mit sich führt, sowie eine Vielzahl an lokalen beziehungsweise ortsfesten Empfangsstationen 4, 5, 6, von denen in dem vorliegenden Ausführungsbeispiel nur drei dargestellt sind. Das Notrufsystem 1 ist zweckmäßigerweise als flächendeckendes Notrufsystem 1 ausgebildet, so dass die Empfangsstationen über ein großes Gebiet hinweg, verteilt angeordnet sind. Insbesondere in Städten kann das Notrufsystem 1 zur Sicherheit der Bürger beitragen. Aber auch durch Anordnung entsprechender Empfangsstationen außerhalb von Städten, ist das Notrufsystem 1 nutzbar und von Vorteil für seine Benutzer.

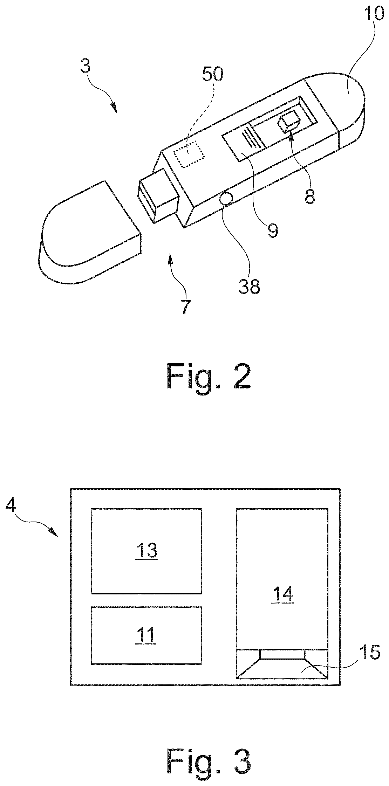

Figur 2 zeigt in einer perspektivischen Darstellung ein Ausführungsbeispiel des Mobilgeräts 3, das jedem Benutzer des Notrufsystems 1 zur Verfügung gestellt wird. Jeder Benutzer besitzt also ein derartiges Mobilgerät. Das Mobilgerät 3 ist vorliegend als sogenannter USB-Stick ausgebildet, der einen USB-Anschluss 7 zur Daten- und Energieübertragung nutzbar ist, und der sich durch einen in Figur 2 dargestellten Deckel verschließen lässt. Weiterhin weist das Mobilgerät einen Notrufschalter 8 auf, der vorliegend als Druckknopf ausgebildet ist. Dem Notrufschalter 8 ist ein optionaler Sicherungsschieber 9 zugeordnet, der in einer Schiebestellung, wie in Figur 2 dargestellt, den Notrufschalter 8 freigibt, und in einer anderen Schiebestellung den Notrufschalter 8 überdeckt, um ein versehentliches Betätigen des Notrufschalters 5 zu verhindern. Neben einem wiederaufladbaren Energiespeicher (in Figur 2 nicht dargestellt) weist das Mobilgerät 3 außerdem ein Funkmodul 10 auf, das vorliegend als WLAN-Modul (WLAN=drahtloses lokales Netzwerk) zum Senden und gegebenenfalls auch zum Empfangen von Daten ausgebildet ist.

Betätigt der Benutzer 2 den Notrufschalter 8, so wird durch das Funkmodul 10 ein Notruf an eine der Empfangsstationen 4 bis 6 ausgesendet.

Figur 3 zeigt in einer vereinfachten Darstellung die Empfangsstation 4, wobei die Empfangsstationen des Notrufsystems 1 vorzugsweise identisch aufgebaut sind, so dass die Erläuterungen zu der Empfangsstation 4 auch die Empfangsstationen 5 und 6 sowie alle weiteren Empfangsstation des Notrufsystems 1 betreffen.

Jede Empfangsstation weist ein Funkmodul 11 auf, das ebenfalls als WLAN-Modul ausgebildet ist und zum Empfangen des Notrufs dient. Das Funkmodul 11 ist dabei stets aktiviert, so dass das Funkmodul 11 beziehungsweise die jeweilige Empfangsstation 4, 5 oder 6 als sogenannter WLAN-Hotspot erkannt wird. Jede der Empfangsstationen des Notrufsystems 1 ist dabei bevorzugt als Router ausgebildet, so dass jede Empfangsstation 4-6 mit einem lokalen Netzwerk verbunden ist, um Daten von und zu einem Zentralserver 12 zu übertragen, wie er in Figur 1 angedeutet ist. Dadurch stehen der Empfangsstation 4 bis 6 mit dem Zentralserver 12 für einen Datenaustausch in Verbindung, insbesondere um einen durch das Mobilgerät 3 ausgelösten Notruf an den Zentralserver 12 weiterzuleiten.

Jede der Empfangsstationen 4 bis 6 weist außerdem eine Steuereinheit 13 auf, sowie eine Alarmeinrichtung 14, die insbesondere zum Erzeugen eines akustischen Alarmsignals ausgebildet ist. Dazu weist die Alarmeinrichtung 14, wie in dem vorliegenden Ausführungsbeispiel gezeigt, vorzugsweise einen Lautsprecher 15 auf. Alternativ oder zusätzlich kann jedoch auch vorgesehen sein, dass die Alarmeinrichtung 14 ein Leuchtmittel zum Erzeugen eines visuellen Alarmsignals aufweist.

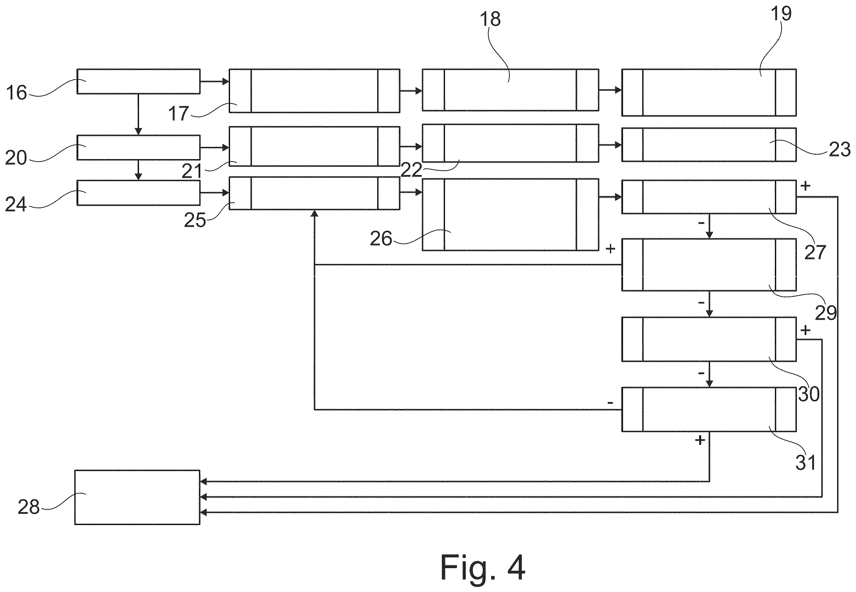

Löst der Benutzer 2 durch Betätigen des Notrufschalters 8 einen Notruf aus, so wird dieser an eine der Empfangsstationen 4 bis 6 per Funk beziehungsweise WLAN übermittelt, und eine der Empfangsstationen 4 bis 6 löst durch ihre Alarmeinrichtung 14 das Alarmsignal aus. Durch das Notrufsystem 1 ist es dem Benutzer 2 also möglich, durch Betätigen seines Mobilgeräts 3 ein Alarmsignal an einer der Empfangsstationen 4 bis 6 des Notrufsystems 1 auszulösen. Dadurch wird die Aufmerksamkeit von dritten Personen sofort auf das Geschehen gelenkt, wodurch beispielsweise ein Überfall auf den Benutzer 2 verhindert oder zumindest durch Verscheuchen und Aufschrecken des oder der Täter abgebrochen wird. Um einen möglichst großen Schutz für den Benutzer zu erwirken, wird das Notrufsystem 1 zunächst eingerichtet, wie es in Figur 4 dargestellt ist.

Figur 4 zeigt einen vorteilhaften Ablaufplan zum Einrichten des Notrufsystems 1, wenn die Empfangsstationen 4 bis 6 bereits flächendeckend über ein vorgegebenes Gebiet installiert wurden und insbesondere werden die Empfangsstationen derart installiert und angeordnet, dass durch die jeweiligen Funkmodule 11 der Empfangsstationen ein flächendeckendes WLAN-Netz in dem Gebiet zur Verfügung gestellt wird. Nachdem die Empfangsstationen installiert wurden und insbesondere mit dem lokalen Netzwerk verbunden wurden, wird wie folgt vorgegangen:

Zunächst wird mittels eines Referenzmobilgeräts, das auch wie das Mobilgerät 3 ausgebildet ist, ein Referenzsystem in einem Schritt 16 erstellt. Dazu positioniert ein Techniker das Referenzmobilgerät an verschiedenen Punkten in dem Gebiet und scannt oder tastet mittels des Funkmoduls des Referenzmobilgeräts die Umgebung auf vorhandene Empfangsstationen ab. Mit Bezug auf das Ausführungsbeispiel 1 stellt sich ein Techniker mit dem Referenzmobilgerät beispielsweise auf verschiedene Punkte der Straße und scannt dann jeweils die Umgebung ab. Das Referenzmobilgerät weist außerdem eine Ortsbestimmungseinrichtung auf, die mit einem globalen Navigationssatellitensystem zusammenwirkt, um Positionsdaten der jeweiligen Position zuzuordnen. An jedem der Referenzpunkte, an welchen der Techniker der die Referenzmessung durchführt, werden somit auch Ortsdaten, beispielsweise GPS-Daten, gespeichert. Während des Abscannens der Umgebung werden die Signalstärken der Funkmodule 11 der Empfangsstationen 4 bis 6, die sich in Reichweite befinden, sowie eine Kennung der jeweiligen Empfangsstation ermittelt und zusammen mit der Position in einem Schritt 18 gespeichert. Alternativ ist vorgesehen, dass die Empfangsstationen 4-6 die Signalstärke des Referenzmobilgeräts 3 erfassen und als Referenzsignalstärke zusammen mit der durch das globale Navigationssatellitensystem erfassten Position speichern und/oder an den Zentralserver 12 senden, um sie dort zu speichern. In einem darauffolgenden Schritt 19 wird bestimmt, welche Empfangsstation auf der jeweiligen Position des Referenzmobilgeräts am ehesten das Alarmsignal auslösen soll. Dabei ist insbesondere vorgesehen, dass bei der Einrichtung in Abhängigkeit von der Position des Referenzmobilgeräts die Empfangsstation ausgewählt wird, die die höchste Schutzwirkung für den Benutzer 2 des Notrufsystems 1 bietet. Dabei wird insbesondere berücksichtigt, dass beispielsweise der Fall vorliegen kann, dass in einer bestimmten Position die am nächsten zu dem Benutzer 2 liegende Empfangsstation nicht im Sichtbereich des Benutzers, sondern beispielsweise hinter einer Hauswand, einem Zaun, einer Baumreihe oder dergleichen verdeckt ist. In diesem Fall ist es sinnvoller, wenn eine der Empfangsstationen 4 bis 6 das Alarmsignal auslöst, die im Sichtbereich des Benutzers 2 liegt, so dass Dritte, die das Alarmsignal hören oder sehen, ausgehend von der das Alarmsignal aussendenden Empfangsstation auch den Benutzer 2 und damit die Gefahr unmittelbar erfassen und gegebenenfalls zur Hilfe eilen können.

Bei der Einrichtung wird somit bevorzugt in Abhängigkeit von dem jeweiligen Referenzpunkt und in Abhängigkeit von den erfassten Referenzsignalstärken der Empfangsstationen 4 bis 6 sowie der tatsächlichen Anordnung und Geeignetheit der jeweiligen Empfangsstation eine optimale Empfangsstation in Schritt 19 vorausgewählt.

Nach dem Aufzeichnen der Referenzpunkte gemäß Schritt 16 werden die dadurch gewonnenen Informationen in einem Schritt 20 gespeichert und in einem Schritt 21 zu dem Zentralserver 12 übertragen. Vorzugsweise werden in Abhängigkeit von Referenzpunkten Referenzbereiche gebildet, die die Zuständigkeit der jeweiligen Empfangsstation betreffen. So werden Referenzpunkte beispielsweise in Referenzbereiche zusammengefasst und einer der Empfangsstationen als Zuständigkeitsbereich zugeordnet. Der Zentralserver 12 speichert die gesammelten Informationen in einer Datenbank und kontaktiert alle Empfangsstationen, deren Kennung bei dem Erstellen der Referenzpunkte oder Referenzbereiche erfasst wurde in einem Schritt 22, um anschließend den Empfangsstationen in einem Schritt 23 die Informationen über die Referenzpunkte und die damit verbundenen Signalstärken zu übermitteln.

Bei Inbetriebnahme des Notrufsystems 1 berechnen in Schritt 24 die Empfangsstationen 4-6 anhand der nunmehr gespeicherten Daten, in Abhängigkeit des jeweiligen Referenzpunkts und/oder Referenzbereichs, welche der Empfangsstationen sich optimal zum Auslösen des Alarmsignals eignet, vorbehaltlich der in Schritt 19 getroffenen Vorauswahl. Dazu berechnen die Empfangsstationen mittels der Steuereinheit 13 oder dem Zentralserver 12 in einem Schritt 25 den Zuständigkeitsbereich für die jeweilige Empfangsstation. Dazu wird in einem Schritt 26 ein Signalstärkenbereich von Referenzsignalstärken ermittelt, in denen die jeweilige Empfangsstation das Alarmsignal auslösen soll. Dies erfolgt in Abhängigkeit von der Stärke der Signalstärken und der in Schritt 13 getroffenen Vorauswahl. Ist keine Vorauswahl getroffen, so löst die Empfangsstation mit der höchsten Signalstärke auf, die in Bezug auf den jeweiligen Referenzpunkt erfasst wurde. Die Referenzsignalstärken beziehungsweise Referenzsignalstärkenbereiche berechnet vorzugsweise jede Empfangsstation für sich selbst und bevorzugt auch für wenigstens eine benachbarte Empfangsstation.

Wird ein Notruf ausgelöst, so prüft die jeweilige Empfangsstation in einem Schritt 27, ob sie sich in dem Zuständigkeitsbereich befindet, beziehungsweise, ob das Notrufsignal gemäß einer Signalstärke sich innerhalb des Referenzsignalstärkenbereichs befindet. Wird der Alarm in dem Zuständigkeitsbereich der Empfangsstation ausgelöst, so wird der Alarm in einem Schritt 28 ausgelöst. Liegt die erfasste Signalstärke nicht in dem Signalstärkenbereich beziehungsweise wird der Notruf nicht in dem Zuständigkeitsbereich der Empfangsstation ausgelöst, prüft sie in einem darauffolgenden Schritt 29, in welchem Zuständigkeitsbereich der Notruf ausgesandt wurde und sendet die Daten an die entsprechende Empfangsstation, welche dann entsprechend Schritt 25 und/oder 27 prüft, ob sie im Zuständigkeitsbereich liegt.

Wird kein passender Zuständigkeitsbereich gefunden, so prüft die den Notruf als erste empfangende Empfangsstation, welche der benachbarten Empfangsstationen in Schritt 30 einen Zuständigkeitsbereich aufweist, der am nächsten an dem Notrufsignal liegt. Wenn die Empfangsstation nicht selbst diejenige ist, deren Zuständigkeitsbereich am nächsten zu dem Notrufsignal beziehungsweise dem Mobilgerät 3 liegt, so übermittelt die erste Empfangsstation in Schritt 31 die durch den Notruf übermittelte Daten an die passende Empfangsstation, deren Zuständigkeitsbereich am nächsten zu dem Notrufsignal liegt, so dass diese den Alarm gemäß Schritt 28 auslöst. Diese zweite Empfangsstation, die den Notruf durch die erste Empfangsstation erhält, geht vorzugsweise gemäß der Schritte 25 bis 31 vor, um zu bestimmen, ob sie selbst dazu geeignet ist, das Alarmsignal auszulösen beziehungsweise, ob sie tatsächlich in dem betreffenden Zuständigkeitsbereich oder am nahesten dazu liegt.

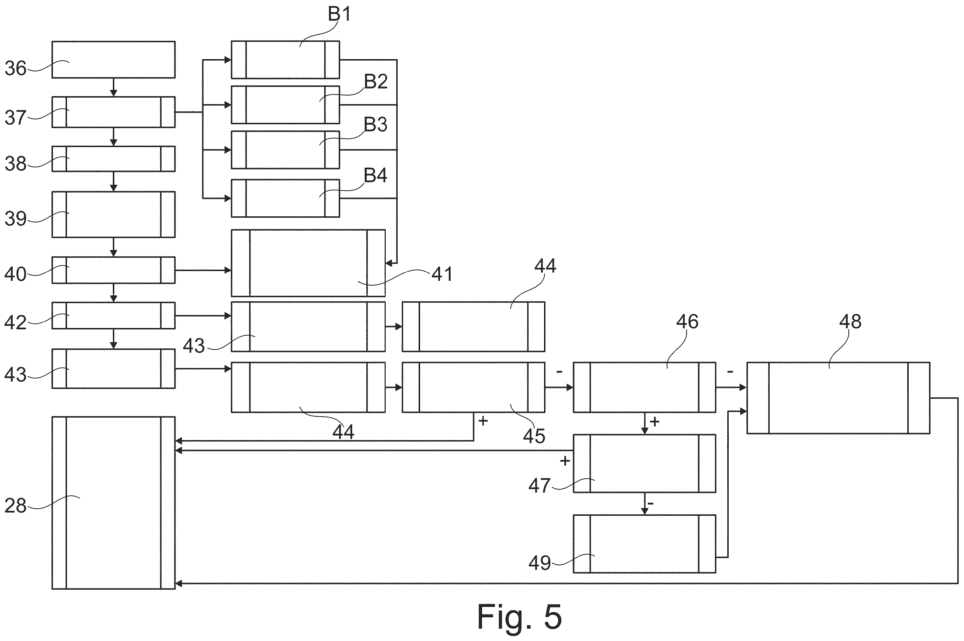

Im Folgenden soll anhand von Figur 5 ein vorteilhaftes Ausführungsbeispiel zum Betreiben des Notrufsystems 1 erläutert werden. Dabei wird vorliegend von der in Figur 1 dargestellten Situation ausgegangen, in welcher sich der Benutzer 2 auf einem Weg 32 befindet, von welchem ein Weg 33 abzweigt, wobei sich der Benutzer 2 an der Abzweigung befindet. Die Empfangsstationen 5 und 4 liegen dabei im Sichtbereich des Benutzers 2, während die Empfangsstation 6 durch eine Gebäudestruktur 34 verdeckt ist. Außer der Gebäudestruktur 34 sind auch noch weitere Gebäudestrukturen 35 vorgesehen, die jedoch nicht zwischen Benutzer 2 und einer der Empfangsstationen 4 oder 5 liegen.

Nähert sich dem Benutzer 2 ein Unbekannter oder ist es offensichtlich, für den Benutzer 2, dass er überfallen wird oder sich in einer anders gearteten Notfallsituation, wie beispielsweise einem Unfall, befindet, so betätigt der Benutzer 2 in einem ersten Schritt 36 das Mobilgerät 3, insbesondere indem er zunächst den Sicherungsschieber 9 zur Seite schiebt, um den Notrufschalter 8 freizulegen, und dann den Notrufschalter 8 drückt. In einem darauffolgenden Schritt 37 prüft das Mobilgerät 3, um was für eine Art von Betätigung es sich handelt.

Insbesondere weist das Mobilgerät 3 ebenfalls eine Steuereinheit (in Figur 2 nicht dargestellt) auf, die in Abhängigkeit von der Betätigung des Notrufschalters 8 zwischen verschiedenen Arten von Notrufen unterscheidet. Insbesondere wird dabei unterschieden, ob es sich um einen lauten Alarm oder um einen stillen Alarm handeln soll. So ist beispielsweise vorgesehen, dass wenn der Notrufschalter 8 nur einmal kurz betätigt wird, ein Notruf sofort zum Auslösen eines lauten Alarms, also zum Auslösen eines akustischen Alarmsignals, ausgesendet wird. Wird der Notrufschalter 8 innerhalb von beispielsweise maximal zwei Sekunden ein weiteres Mal betätigt, so wird darauf erkannt, dass ein stiller Alarm ausgelöst werden soll, bei welchem beispielsweise als Alarmsignal eine visuelle Warnung und/oder eine Mitteilung an den Zentralserver 12 beziehungsweise an die Notrufzentrale weitergeleitet wird. Der stille Alarm kann beispielsweise dann von Vorteil sein, wenn eine Gefahrensituation nicht vorzeitig beziehungsweise vor Eintreffen von Hilfskräften eskalieren soll.

Das Mobilgerät 3 weist vorteilhafterweise, wie in Figur 2 dargestellt, außerdem ein Mikrofon 38 auf, mittels dessen das Mobilgerät 3 Umgebungsgeräusche aufnehmen kann. In Abhängigkeit von der Betätigung des Notrufschalters 8 kann der Benutzer 2 außerdem bestimmen, ob zusätzlich zu dem Notruf eine Audioübertragung des Geschehens erfolgen soll. Vorteilhafterweise ist dabei vorgesehen, dass, wenn der Benutzer den Notrufschalter 8 beim ersten oder zweiten Drücken gedrückt hält, das Mikrofon 38 nicht aktiviert beziehungsweise eine Audioaufnahme nicht gestartet wird. Dadurch ergeben sich vorliegend verschiedene Basisfunktionen des Mobilgeräts 3 in Abhängigkeit von der Betätigung des Auslöseschalters beziehungsweise Notrufschalter 8. In einer ersten Basisfunktion B1, wird ein lauter Alarm ausgelöst und die Audioaufnahme aktiviert. In einer zweiten Basisfunktion B2 wird ein stiller Alarm ausgelöst und die Audioaufnahme aktiviert. In einer dritten Basisfunktion B3 wird ein stiller Alarm ausgelöst, ohne dass eine Audioaufnahme erfolgt und in der vierten Basisfunktion B4 wird ein lauter Alarm ausgelöst, ohne dass eine Audioaufnahme erfolgt.

Natürlich ist es auch denkbar, die Benutzungsmöglichkeiten auf nur eine oder zwei Basisfunktionen einzuschränken, so dass der Benutzer nur die Wahl hat zwischen einem lauten und einem leisen Alarm hat, wobei die Audioaufnahme beispielsweise standardmäßig gestartet wird.

Für den Fall, dass eine Audioaufnahme gewünscht ist, ist vorgesehen, dass das Mikrofon kontinuierlich Umgebungsgeräusche aufnimmt. Dabei werden Datenaudiopakete von beispielsweise fünf Sekunden erzeugt, die durch das Funkmodul des Mobilgeräts 3 zusammen mit dem Notruf und insbesondere auch nach Aussenden des Notrufs an die jeweilige Empfangsstation gesendet werden. Das bedeutet, dass beispielsweise jeweils nur die letzten fünf Sekunden alle fünf Sekunden an die jeweilige Empfangsstation 4 bis 6 übermittelt werden, und nicht die komplette Aufnahme an einem Stück. Dadurch wird die gesamte Audioaufnahme in mehrere Abschnitte geteilt übermittelt. Hierdurch wird der Vorteil erreicht, dass, falls sich der Benutzer 2 aus dem Empfangsbereich der jeweiligen Empfangsstation 4 bis 6 entfernt, wodurch die Audioübertragung unterbrochen werden könnte, sichergestellt ist, dass so viel Tonaufnahme wie möglich an die Empfangsstation übermittelt wird. Die das Signal empfangende Empfangsstation 4, 5 oder 6 zeichnet vorzugsweise ebenfalls ein Tonsignal auf und leitet dieses zusammen mit dem von dem Mobilgerät 3 erzeugten Audiopaket an den Zentralserver 12 weiter. Hierdurch wird zum einen Beweismaterial gesichert und zum anderen kann eine Person in der Notrufzentrale die Dringlichkeit des Notrufs sowie die vorliegende Gefahrensituation einschätzen.

Vorzugsweise ist vorgesehen, dass das Mobilgerät 3 derart ausgebildet ist, dass eine elektrische Verbindung des Funkmoduls 10 zu dem zuvor bereits genannten Energiespeicher erst mit Betätigen des Notrufschalters 8 hergestellt wird, so dass nach einem Aufladen des Energiespeichers dieser über eine sehr lange Zeit Energie zur Verfügung stellt, bis das Mobilgerät 3 das erste Mal genutzt wird. Dadurch wird sichergestellt, dass das Mobilgerät 3 nach dem Aufladen für lange Zeit zur Verfügung steht.

Nach Inbetriebnahme des Mobilgeräts 3 durch den Benutzer 2 scannt das Mobilgerät 3 mittels des Funkmoduls 10 die Umgebung nach in der Nähe befindlichen Empfangsstationen in einem Schritt 38 ab. Da die Funkmodule 11 der Empfangsstationen 4 bis 6 stets aktiviert sind, erfasst das Funkmodul 10 des Mobilgeräts 3 die Empfangsstationen 4 bis 6, sofern sie sich entsprechend in der Nähe befinden. Das Mobilgerät 3 erfasst dabei in einem Schritt 39 die Kennungen der in der Nähe befindlichen Empfangsstationen sowie die Signalstärke der jeweiligen Empfangsstation beziehungsweise des jeweiligen Funkmoduls 11. Als nächstes wählt das Mobilgerät 3 in einem Schritt 40 eine der Empfangsstationen 4 bis 6 aus, an welche er den Notruf sendet. Diese erste Empfangsstation wählt das Mobilgerät 3 in einem Schritt 41 in Abhängigkeit von den erfassten Signalstärken und/oder in Abhängigkeit von dem Zeitpunkt, zu welchem das Mobilgerät 3 die jeweilige Empfangsstation 4 bis 6 erfasst hat. Vorzugsweise ist vorgesehen, dass das Mobilgerät 3 die Empfangsstation der Empfangsstation 4 bis 6 auswählt, die die größte Signalstärke aufweist. Dadurch wird gewährleistet, dass auch die Audioaufnahme beziehungsweise die Audiodatenpakete am schnellsten und sichersten übertragen werden können. Wird das Mobilgerät 3 betätigt, um einen Alarm ohne Audioaufnahme (beispielsweise B3 oder B4) auszulösen, so kann auch alternativ vorgesehen sein, dass das Mobilgerät 3 die Empfangsstation auswählt, die sie als erste erreicht. In dem vorliegenden Ausführungsbeispiel gemäß Figur 1 ist die am nächsten gelegene Empfangsstation die Empfangsstation 6 (Fluglinie). Ist die Gebäudestruktur 34 entsprechend durchlässig, wird davon ausgegangen, dass in den Empfangsstationen jeweils das gleiche Funkmodul mit der gleichen Sendeleistung verbaut ist, ist für das Mobilgerät 3 somit die Empfangsstation 6 diejenige mit der höchsten Signalstärke. Entsprechend wird die Empfangsstation 6 als erste Empfangsstation ausgewählt.

Anschließend sendet das Mobilgerät 3 mittels des Funkmoduls 10 in einem Schritt 42 den Notruf und die gesammelten Daten, nämlich die Kennung und die Signalstärke der Empfangsstationen, die sie erfasst hat, an diese erste Empfangsstation. An die erste Empfangsstation 6 werden also die zuvor gesammelten Daten zusammen mit dem Notruf beziehungsweise der gewünschten Art der Alarmierung gemäß Schritt 43 gesendet. Auch werden gemäß Schritt 44 die Audiodatenpakete in dem entsprechenden zuvor gewählten Zeitraster von dem Mobilgerät 3 an die Empfangsstation 6 übertragen. Sobald die erste Empfangsstation 6 die Daten erhalten hat, werden diese in einem Schritt 43 gemäß der Unterschritte 44 bis 49 verarbeitet und insbesondere unmittelbar direkt an den Zentralserver 12 weitergeleitet. Zunächst wird eine Kennung des Mobilgeräts 3, die mit dem Notruf mitgesandt wurde, die von dem Mobilgerät 3 erfassten Signalstärken der Empfangsstationen 4 bis 6 sowie die Kennungen der Empfangsstationen 4 bis 6 erfasst und an den Zentralserver 12 in Schritt 44 weitergeleitet.

Darauffolgend oder parallel dazu, im Unterschritt 45, prüft die Empfangsstation 6, wie zuvor bezüglich Figur 4 beschrieben, ob sie die richtige ist, um das Alarmsignal auszulösen. Dazu vergleicht sie die von dem Mobilgerät 3 erfassten Signalstärken mit den beim Einrichten des Notrufsystems 1 erfassten gespeicherten Referenzsignalstärken oder Referenzsignalbereichen, um zu bestimmen, ob die erste Empfangsstation 6 selbst das Alarmsignal auslösen soll. Dabei wird auch berücksichtigt, ob eine der ebenfalls von dem Mobilgerät 3 erfassten Empfangsstationen 4 oder 5 bei der Einrichtung des Notrufsystems 1 als vorausgewählte Empfangsstation bestimmt wurde. Dazu wird anhand der Signalstärken die Position des Mobilgeräts 3 bestimmt. Dabei ist besonders bevorzugt vorgesehen, dass die erfassten und übermittelten Signalstärken mit den Referenzsignalstärken oder -bereichen verglichen werden, wobei die Referenzsignalstärken oder -bereiche, wie zuvor beschrieben, zusammen mit Ortsdaten des jeweiligen Referenzpunktes gespeichert wurden. Somit kann durch Auswertung der erfassten Signalstärken auch auf die tatsächliche Position des Mobilgeräts 3 geschlossen werden. Auch ist es denkbar, anhand von Triangulation und der erfassten Signalstärken die Position des Mobilgeräts 3 zu errechnen. Stellt die Empfangsstation 6 dabei fest, dass die erfasste Position im Wesentlichen der Position eines Referenzpunktes oder Referenzbereichs entspricht, welcher einer vorausgewählten Empfangsstation zum Auslösen eines Alarmsignals zugeordnet ist, so leitet die erste Empfangsstation 6 den Notruf an die vorausgewählte Empfangsstation weiter.

In dem vorliegenden Ausführungsbeispiel ist beispielsweise die Empfangsstation 4 für die Position des Benutzers 2 als vorausgewählte Empfangsstation bestimmt worden, da sie im Sichtbereich des Benutzers 2 und an dem Weg liegt, auf welchem sich der Benutzer 2 befindet. Damit eignet sich die Empfangsstation 4 am besten dazu, das Alarmsignal auszulösen, da hierdurch die Aufmerksamkeit am schnellsten auf den Benutzer 2 gelenkt werden kann. Somit sendet die erste Empfangsstation in dem vorliegenden Ausführungsbeispiel den Notruf an die Empfangsstation 4 weiter (Schritt 46).

Die zweite Empfangsstation 4 bestätigt der ersten Empfangsstation 6 im Schritt 47 daraufhin den Empfang der Daten. Für den Fall, dass die zweite Empfangsstation 4 nicht im Empfangsbereich beziehungsweise Sendebereich der ersten Empfangsstation 6 liegt, sendet die erste Empfangsstation die Daten an den Zentralserver 12, der daraufhin die zweite Empfangsstation 4 kontaktiert. Sollte dies fehlschlagen, löst die erste Empfangsstation 6 das Alarmsignal aus (Unterschritt 48).

Für den Fall, dass die zweite Empfangsstation 4 den Empfang der Daten nicht innerhalb einer bestimmten Zeitspanne bestätigt, auch wenn die zweite Empfangsstation 4 im Sendebereich der ersten Empfangsstation der ersten Empfangsstation 6 liegt, so kontaktiert die erste Empfangsstation 6 ebenfalls den Zentralserver 12, um über diesen die zweite Empfangsstation 4 gemäß Schritt 48 zu erreichen (Unterschritt 49).

In Abhängigkeit des jeweils gewünschten Alarmsignals (B1 bis B4) löst dann die entsprechende Empfangsstation 4 oder 6 einen stillen oder lauten Alarm mittels der jeweiligen Alarmeinrichtung 14 auf. Der stille Alarm wird bevorzugt von einem visuellen Alarmsignal begleitet, um durch den stillen Alarm alarmierte Hilfskräfte die Orientierung beim Eintreffen im Bereich des Geschehens zu erleichtern.

Optional ist vorgesehen, dass das Mobilgerät 3 mit einer NFC-Einrichtung 50 (NFC=Nahfeldkommunikation), in Figur 2 gestrichelt dargestellt, ausgestattet ist, die zum Aktivieren des Mobilgeräts 3 dient. Um eine hohe Sicherheit zu erreichen, muss sichergestellt werden, dass ein Notruf nur von dazu autorisierten Mobilgeräten 3 ausgelöst werden kann. Jedes für das Notrufsystem 1 bereitgestellte Mobilgerät 3 wird mit einer Kennung, wie bereits erwähnt, versehen. Wird ein Mobilgerät in einem Geschäft erworben, so wird das Mobilgerät 3 bevorzugt dadurch aktiviert, dass das Mobilgerät 3 auf ein NFC-Gerät festgelegt und der Notrufschalter 8 betätigt wird. Dabei ist das Mobilgerät 3 derart ausgebildet, dass in der Nähe eines NFC-Geräts bevorzugt kein Notruf ausgesendet beziehungsweise kein Alarm ausgelöst wird. Das NFC-Gerät ist mit einem Router des Geschäfts verbunden, welches die Anfrage zur Aktivierung an den Zentralserver 12 weiterleitet. Dieser sendet die Bestätigung zurück an das NFC-Gerät, wenn die Kennung des NFC-Geräts und die Kennung des Routers des Geschäfts den im Zentralserver hinterlegten Kennungen entspricht. Dazu ist dem System bekannt, welches Mobilgerät 3 mit welcher Kennung an welches Geschäft mit welcher Routerkennung und mit welcher NFC-Gerätekennung gesandt wurde. Dadurch kann sichergestellt werden, dass das Mobilgerät 3 nur durch ein autorisiertes Geschäft aktivierbar ist.

Vorteilhafterweise ist außerdem vorgesehen, dass die Empfangsstationen 4 bis 6 untereinander kommunizieren. Insbesondere ist vorgesehen, dass jede der Empfangsstationen 4 bis 6 regelmäßig ihre Umgebung nach benachbarten Empfangsstationen abscannt. Wird dabei erfasst, dass plötzlich eine der bisher bekannten Empfangsstationen, die beispielsweise durch einen vorherigen Scan bekannt sind oder deren Position und Signalstärke durch den Zentralserver 12 bekannt gemacht wurden, fehlt, wird dies an den Zentralserver 12 gemeldet. Dadurch können beispielsweise Diebstähle verhindert oder zumindest schnell bemerkt werden. Zweckmäßigerweise wird die Position der jeweiligen Empfangsstation mit Längen- und Breitengrad bei der Einrichtung des Notrufsystems 1 erfasst und in der jeweiligen Empfangsstation 4 bis 6 oder auch in dem Zentralserver 2 gespeichert. Auch kann dadurch auf einen Defekt einer der Empfangsstationen 4 bis 6 schnell geschlossen werden. Sollte außerdem eine der Empfangsstationen 4 bis 6 geklaut worden sein, und an einer anderen Stelle wieder aktiviert worden sein, so wird diese von der in Nähe befindlichen Empfangsstationen erfasst, welche dem Zentralserver 12 melden, dass eine unerwartete Empfangsstation aufgetaucht ist. Dadurch können gestohlene Empfangsstationen auch wieder aufgefunden werden.

Vorteilhafterweise ist das Notrufsystem 1 weiterhin derart ausgebildet, dass der Zentralserver 12 bei Eingang eines Notrufs die in der Nähe des Mobilgeräts befindlichen Empfangsstationen ansteuert, um über WLAN eine Warnmeldung an Mobilfunkgeräte, die ebenfalls sich in dem WLAN-Netz bewegen, auszusenden, so dass beispielsweise auch auf dem Smartphone eines Passanten der Hinweis über einen ausgelösten Alarm in seiner Nähe angezeigt wird. Dies ist insbesondere dann vorteilhaft, wenn ein stiller Alarm durch den Benutze 2 ausgelöst wurde.

Vorzugsweise das Mobilgerät 3 außerdem eine Vibrationseinrichtung auf, die eine Betätigung des Notrufschalters 8 durch einmaliges oder mehrmaliges Vibrieren, in Abhängigkeit von der Art der Betätigung des Notrufschalters 8, bestätigt. Auch kann vorgesehen sein, dass durch eine Vibration das Auslösen eines stillen Alarms an einer der Empfangsstationen 4 bis 6 bestätigt wird.

Für den Fall, dass zum Zeitpunkt des Betätigen des Notrufschalters 8 keine Empfangsstation im Sendebereich des Mobilgeräts 3 liegt, ist vorgesehen, dass das Mobilgerät 3 so lange den Notruf sendet, bis eine erste Empfangsstation erfasst wird, wenn sich der Benutzer beispielsweise mit dem Mobilgerät 3 weiterbewegt und in den Empfangsbereich einer Empfangsstation gelangt. So wird dann im Nachhinein der Notruf ausgesendet und das Alarmsignal ausgelöst. Sollte die Kommunikation der Empfangsstationen 4 bis 6 durch das lokale Netzwerk zu dem Zentralserver 12 gestört sein, so kann aufgrund der oben beschriebenen Ausbildung des Notrufsenders 1 ein Alarmsignal auch unabhängig von dem Zentralserver 12 ausgelöst werden. Dies ist insbesondere dann der Fall, wenn die dafür notwendigen Daten von dem Zentralserver 12 in regelmäßigen Abständen auf die Empfangsstationen 4 bis 6 aufgespielt werden und eine Verbindung zu dem Zentralserver 12 nur zur Aktualisierung und zur Weiterleitung eines empfangenen Notrufes an den Zentralserver 12 notwendig ist.

Vorteilhafterweise sind die Empfangsstationen 4 bis 6 jeweils als Router ausgebildet, die gleichzeitig dem Benutzer des Notrufsystems einen Zugang zum Internet (Hotspot) bereitstellen. Auch ist es möglich, durch die Empfangsstationen 4 bis 6 dritten Benutzern, die nicht in dem Notrufsystem 1 registriert sind, die Benutzung der Hotspots freizugeben. Die Kommunikationsverbindung zu dem lokalen Netzwerk kann durch den jeweiligen Router beziehungsweise die jeweilige Empfangsstation 4 bis 6 ebenfalls per Funk oder auch kabelgebunden erfolgen. Alternativ zur Ausbildung der Funkmodule 10, 11 des Notrufsystems 1 als WLAN-Module ist es auch denkbar, die Funkmodule 10,11 als Bluetooth-Module auszubilden.

Das Notrufsystem 1 ist vorteilhafterweise außerdem derart ausgebildet, dass der Zentralserver 12 ein Alarmsignal an mehreren der Empfangsstationen auslösen kann, beispielsweise um vor weitreichenden Gefahren, wie beispielsweise Tornados, Amokläufen oder dergleichen zu warnen, die sich durch das Gebiet des Notrufsystems 1 bewegen.

Optional ist vorgesehen, die jeweilige Empfangsstationen 4 bis 6 mit einer Kameraeinrichtung zu versehen, die nach Empfang eines Notrufs aktiviert wird, um auch eine Bildübertragung des Geschehens an den Zentralserver 12 durchzuführen. Alternativ zu der in Figur 2 dargestellten Ausführungsform des Mobilgeräts 3 kann auch vorgesehen sein, das Mobilgerät 3 als Armbanduhr, Mobiltelefon oder dergleichen auszubilden. Mittels des Mobilgeräts 3 kann der Benutzer nicht nur für sich selbst Hilfe anfordern, sondern auch für Personen in seiner Umgebung. Der Benutzer 2 kann sich dabei zunächst sicher sein, dass er nicht als der Verursacher des Alarmsignals erkannt wird, so dass sich der Benutzer selbst nicht in Gefahr begibt, wenn er den Alarm für eine dritte Person auslöst. Dadurch wird gegebenenfalls die Hemmschwelle zum Auslösen eines Alarmsignals in einer Gefahrensituation für Benutzer des Notrufsystems 1 gesenkt. Zweckmäßigerweise ist das jeweilige Mobilgerät 3 einer bestimmten Person zugeordnet, so dass nach Auslösen eines Notrufs die Person, falls sie sich vom Ort des Geschehens bereits entfernt hat, bevor die Hilfskräfte eintreffen, auch im Nachhinein befragt werden kann. Dadurch wird auch ein Missbrauch des Notrufsystems 1 vermieden.

Das Notrufsystem 1 ist auch für Gegenden geeignet, in welchen kein Mobilfunknetz zum Absenden eines Notrufs zur Verfügung steht. Auch ist es dort anwendbar, wo eine Empfangsstation nicht mit einem lokalen Netzwerk (LAN) verbunden ist. Stattdessen sendet diese Empfangsstationen beispielsweise den Alarm per WLAN an die nächstgelegene Empfangsstation weiter, welche selbst mit dem lokalen Netzwerk verbunden ist.

Gemäß einem weiteren Ausführungsbeispiel ist vorgesehen, dass ein Mobiltelefon des Benutzers 2 dazu eingerichtet wird, mit dem Mobilgerät 3, insbesondere mit dem USB-Stick, insbesondere drahtlos, beispielsweise mittels des WLAN-Moduls (eine drahtgebundene Kommunikation ist alternativ ebenfalls denkbar) zu kommunizieren. Dabei ist insbesondere vorgesehen, dass das Mobilgerät 3 zusätzlich zu dem als WLAN-Modul ausgebildeten Funkmodul 10 ein weiteres Funkmodul aufweist, das als Bluetooth-Modul ausgebildet ist. Für den Fall, dass sich der Benutzer 2 in einer Umgebung befindet, in welcher keine Empfangsstation im Empfangsbereich des WLAN-Moduls beziehungsweise des Funkmoduls liegt, wechselt das Mobilgerät 3 zur Ansteuerung des zweiten Funkmoduls beziehungsweise des Bluetooth-Moduls, um mittels des Bluetooth-Moduls den Notruf an das Mobiltelefon des Benutzers auszusenden. Das Mobiltelefon ist dabei derart programmiert, dass es, wenn es den Notruf des Mobilgeräts 3 erfasst, über das Mobilfunknetz, bei welcher das Mobiltelefon üblicherweise kommuniziert, den Notruf an eine oder die Notrufzentrale weiterzuleiten, und dabei insbesondere Positionsdaten des Mobilgeräts 3 und/oder des Mobiltelefons selbst zu übermitteln. Dadurch kann zumindest Hilfe bei Auslösen des Mobilgeräts 3 angefordert werden, ohne dass dies ein potenzieller Angreifer bemerkt. Gemäß einer vorteilhaften Weiterbildung des Ausführungsbeispiels ist vorgesehen, dass die Notrufzentrale von Ferne die Empfangsstation, die sich in Kenntnis der übermittelten Positionsdaten des Mobilgeräts 3 am nächsten zu dem Mobilgerät 3 befindet, angesteuert wird, um das Alarmsignal auszugeben.

## Patentansprüche

1. Verfahren zum Betreiben eines Notrufsystems (1), das mindestens ein Mobilgerät (3) mit mindestens einem Funkmodul (10) zum Aussenden eines Notrufs sowie eine Vielzahl von Empfangsstationen (4-6) mit jeweils mindestens einem Funkmodul (11) zum Empfangen des Notrufs aufweist, wobei jede Empfangsstation (4-6) als Router ausgebildet ist und eine Alarmeinrichtung (14) zum Ausgeben eines akustischen und/oder visuellen Alarmsignals aufweist, und wobei das Mobilgerät (3) zum Auslösen eines Alarmsignals den Notruf an eine erste der Empfangsstationen (4-6) sendet, wobei eine Position des Mobilgeräts (3) bezüglich der Empfangsstationen (4-6) ermittelt und in Abhängigkeit von der ermittelten Position nur eine der Empfangsstationen (4-6) zum Ausgeben des Alarmsignals ausgewählt wird.

2. Verfahren nach Anspruch 1, **dadurch gekennzeichnet, dass** das Mobilgerät (3) Signalstärken der Funkmodule (11) der Empfangsstationen (4-6) ermittelt, und der Empfangsstation (6) den Notruf zusendet, deren Funkmodul (11) die größte Signalstärke aufweist.

3. Verfahren nach einem der vorhergehenden Ansprüche, **dadurch gekennzeichnet, dass** das Mobilgerät (3) der ersten Empfangsstation (6) die erfassten Signalstärken aller erfassten Empfangsstationen (4-6) mit dem Notruf sendet, wobei in Abhängigkeit dieser Signalstärken die erste Empfangsstation (6) die Position des Mobilgeräts (3) bestimmt.

4. Verfahren nach einem der vorhergehenden Ansprüche, **dadurch gekennzeichnet, dass** die erfassten Signalstärken durch die erste Empfangsstation mit einer oder mehreren Referenzsignalstärken verglichen werden, wobei die erste Empfangsstation das Alarmsignal nur dann auslöst, wenn die erfassten Signalstärken einer oder mehreren der Referenzsignalstärken entsprechen.

5. Verfahren nach einem der vorhergehenden Ansprüche, **dadurch gekennzeichnet, dass** zum Einrichten des Notrufsystems (1) an unterschiedlichen Positionen eine durch die Empfangsstationen (4-6) jeweils erfasste Referenzsignalstärke eines Referenzmobilgeräts zusammen mit durch ein globales Navigationssatellitensystem ermittelten Positionsdaten des Referenzmobilgeräts gespeichert werden.

6. Verfahren nach einem der vorhergehenden Ansprüche, **dadurch gekennzeichnet, dass** nach Empfangen des Notrufs die erste Empfangsstation (6) zumindest den Notruf, eine Kennung des Mobilgeräts (3) sowie die Positionsdaten der ersten Empfangsstation und/oder des Mobilgeräts (3) an einen Zentralserver (12) weiterleitet.

7. Verfahren nach einem der vorhergehenden Ansprüche, **dadurch gekennzeichnet, dass** zum Einrichten des Notrufsystems (1) bei der Ermittlung der Referenzsignalstärken in Abhängigkeit der Position des Referenzmobilgeräts eine von mehreren in der Reichweite befindlichen Empfangsstationen (4-6) zum Auslösen des Alarmsignals vorausgewählt wird.

8. Verfahren nach einem der vorhergehenden Ansprüche, **dadurch gekennzeichnet, dass** beim Einrichten des Notrufsystems (1) in den Empfangsstationen (4-6) Positionsdaten benachbarter Empfangsstationen gespeichert werden, wobei die erste Empfangsstation (6) in Abhängigkeit der Position des Mobilgeräts (3) selbst das Alarmsignal auslöst oder den Notruf an eine benachbarte zweite Empfangsstation (4) weiterleitet, wenn die zweite Empfangsstation (4) näher zu der erfassten Position des Mobilgeräts (3) ist als die erste Empfangsstation (6) oder die vorausgewählte Empfangsstation (4) ist.

9. Verfahren nach einem der vorhergehenden Ansprüche, **dadurch gekennzeichnet, dass** die jeweilige Empfangsstation (4-6) in Abhängigkeit von dem gesendeten Notruf einen stillen Alarm oder einen lauten Alarm auslöst.

10. Verfahren nach einem der vorhergehenden Ansprüche, **dadurch gekennzeichnet, dass** die Empfangsstationen (4-6) mittels ihres jeweiligen Funkmoduls (11) ihre Umgebung abtasten, um benachbarte Empfangsstationen (4-6) zu erfassen.

11. Verfahren nach einem der vorhergehenden Ansprüche, **dadurch gekennzeichnet, dass** das Mobilgerät (3) mit dem Absenden des Notrufs eine Audioaufnahme startet und insbesondere Audiodatenpakete in regelmäßigen Abständen an die erste Empfangsstation (6) und/oder an wenigstens eine weitere Empfangsstation (4) sendet.

12. Verfahren nach einem der vorhergehenden Ansprüche, **dadurch gekennzeichnet, dass** mit dem Notruf durch das Mobilgerät (3) eine Benutzerkennung oder Mobilgerätkennung mitgesendet wird.

13. Verfahren nach einem der vorhergehenden Ansprüche, **dadurch gekennzeichnet, dass** ein Alarmsignal nur dann ausgelöst wird, wenn die Benutzerkennung oder Mobilgerätkennung einer im Zentralserver (12) oder in der ersten Empfangsstation (6) hinterlegten autorisierten Benutzerkennung oder Mobilgerätkennung entspricht.

14. Notrufsystem (1), insbesondere zur Durchführung des Verfahrens nach einem oder mehreren der vorhergehenden Ansprüche, mit mindestens einem Mobilgerät (3) zum Auslösen eines Notrufs, mit einer Vielzahl von Empfangsstationen (4-6) zum Empfangen des Notrufs, wobei das Mobilgerät einen Notrufschalter (8) aufweist, bei dessen Betätigung das Mobilgerät (3) den Notruf an eine der Empfangsstationen (4-6) sendet, wobei die Empfangsstationen (4-6) und das Mobilgerät (3) dazu jeweils mindestens ein Funkmodul (10,11) aufweisen, **dadurch gekennzeichnet, dass** jede Empfangsstation (4-6) als Router ausgebildet ist und eine Alarmeinrichtung (14) sowie eine Steuereinheit (13) aufweist, wobei die Alarmeinrichtung (14) zum Ausgeben eines akustischen und/oder visuellen Alarmsignals ausgebildet ist, und wobei die Steuereinheit (13) in Abhängigkeit von einer Signalstärke zumindest eines der Funkmodule (10,11) eine Position des Mobilgeräts (3) ermittelt und in Abhängigkeit von der ermittelten Position ein Alarmsignal mittels nur einer der Alarmeinrichtungen (14) ausgibt.

15. Flächendeckendes Notrufsystem nach Anspruch 14, **dadurch gekennzeichnet, dass** die Funkmodule (10,11) als WLAN-Module oder Bluetooth-Module ausgebildet sind.

## Claims

1. A method for operating an emergency call system (1) which has at least one mobile device (3) with at least one radio module (10) for transmitting an emergency call, and a multiplicity of receiving stations (4-6) each with at least one radio module (11) for receiving the emergency call, each receiving station (4-6) being configured as a router and having an alarm device (14) for outputting an acoustic and/or visual alarm signal, and the mobile device (3) sending the emergency call to a first of the receiving stations (4-6) in order to trigger an alarm signal, a position of the mobile device (3) being determined with respect to the receiving stations (4-6) and only one of the receiving stations (4-6) being selected based upon the determined position to output the alarm signal.

2. Method according to claim 1, **characterized in that** the mobile device (3) determines signal strengths of the radio modules (11) of the receiving stations (4-6), and sends the emergency call to the receiving station (6) whose radio module (11) has the greatest signal strength.

3. Method according to one of the preceding claims, **characterized in that** the mobile device (3) transmits the detected signal strengths of all the detected receiving stations (4-6) to the first receiving station (6) with the emergency call, the first receiving station (6) determining the position of the mobile device (3) based upon these signal strengths.

4. Method according to one of the preceding claims, **characterized in that** the detected signal strengths are compared by the first receiving station with one or more reference signal strengths, the first receiving station triggering the alarm signal only if the detected signal strengths correspond to one or more of the reference signal strengths.

5. Method according to one of the preceding claims, **characterized in that**, in order to set up the emergency call system (1), at different positions a reference signal strength of a reference mobile device which is respectively detected by the receiving stations (4-6) is stored together with position data of the reference mobile device determined by a global navigation satellite system.

6. Method according to one of the preceding claims, **characterized in that**, after receiving the emergency call, the first receiving station (6) forwards at least the emergency call, an identification of the mobile device (3) and the position data of the first receiving station and/or of the mobile device (3) to a central server (12).

7. Method according to one of the preceding claims, **characterized in that**, in order to set up the emergency call system (1), when determining the reference signal strengths as a function of the position of the reference mobile device, one of a plurality of receiving stations (4-6) located within the range is preselected for triggering the alarm signal.

8. Method according to one of the preceding claims, **characterized in that**, when the emergency call system (1) is set up, position data of adjacent receiving stations are stored in the receiving stations (4-6), based upon the position of the mobile device (3) the first receiving station (6) triggering the alarm signal itself or forwarding the emergency call to an adjacent second receiving station (4) if the second receiving station (4) is closer to the detected position of the mobile device (3) than the first receiving station (6) or if the second receiving station is the preselected receiving station (4).

9. Method according to one of the preceding claims, **characterized in that** the respective receiving station (4-6) triggers a silent alarm or a loud alarm based upon the transmitted emergency call.

10. Method according to one of the preceding claims, **characterized in that** the receiving stations (4-6) scan their surroundings by means of their respective radio module (11) in order to detect adjacent receiving stations (4-6).

11. Method according to one of the preceding claims, **characterized in that** the mobile device (3) starts an audio recording along with sending the emergency call and in particular sends audio data packets at regular intervals to the first receiving station (6) and/or to at least one further receiving station (4).

12. Method according to one of the preceding claims, **characterized in that** a user identification or mobile device identification is sent along with the emergency call by the mobile device (3).

13. Method according to one of the preceding claims, **characterized in that** an alarm signal is triggered only if the user identification or mobile device identification corresponds to an authorized user identification or mobile device identification stored in the central server (12) or in the first receiving station (6).

14. Emergency call system (1), in particular for carrying out the method according to one or more of the preceding claims, having at least one mobile device (3) for triggering an emergency call, having a multiplicity of receiving stations (4-6) for receiving the emergency call, wherein the mobile device has an emergency call switch (8), upon the actuation of which the mobile device (3) transmits the emergency call to one of the receiving stations (4-6), wherein the receiving stations (4-6) and the mobile device (3) each have at least one radio module (10, 11) for this purpose, **characterized in that** each receiving station (4-6) is configured as a router and has an alarm device (14) and a control unit (13), the alarm device (14) being configured to output an acoustic and/or visual alarm signal, and the control unit (13) determining a position of the mobile device (3) based upon a signal strength of at least one of the radio modules (10, 11) and outputting an alarm signal by means of only one of the alarm devices (14) based upon the determined position.

15. An area-wide emergency call system according to claim 14, **characterized in that** the radio modules (10, 11) are designed as WLAN modules or Bluetooth modules.

## Revendications

1. Procédé pour faire fonctionner un système d'appel d'urgence (1) qui comporte au moins un dispositif mobile (3) avec au moins un module radio (10) pour émettre un appel d'urgence et une pluralité de stations de réception (4-6) comportant chacune au moins un module radio (11) pour recevoir l'appel d'urgence, chaque station de réception (4-6) étant conçue comme routeur et comportant un dispositif d'alarme (14) pour émettre un signal sonore et/ou visuel d'alarme, et le dispositif mobile (3) envoyant l'appel d'urgence à une première des stations de réception (4-6) pour déclencher un signal d'alarme, une position du dispositif mobile (3) étant déterminée par rapport aux stations de réception (4-6) et une seule des stations de réception (4-6) étant sélectionnée en fonction de la position déterminée afin de délivrer le signal d'alarme.

2. Procédé selon la revendication 1, **caractérisé en ce que** le dispositif mobile (3) détermine les intensités de signal des modules radio (11) des stations de réception (4-6) et envoie l'appel d'urgence dont le module radio (11) présente la plus grande intensité de signal à la station de réception (6).

3. Procédé selon l'une des revendications précédentes, **caractérisé en ce que** le dispositif mobile (3) transmet les intensités de signal détectées de toutes les stations de réception détectées (4-6) à la première station de réception (6) avec l'appel d'urgence, la première station de réception (6) déterminant la position du dispositif mobile (3) en fonction de ces intensités de signal.

4. Procédé selon l'une des revendications précédentes, **caractérisé en ce que** les intensités de signal détectées sont comparées par la première station de réception avec une ou plusieurs intensités de signal de référence, la première station de réception déclenchant le signal d'alarme uniquement si les intensités de signal détectées correspondent à une ou plusieurs des intensités de signal de référence.

5. Procédé selon l'une des revendications précédentes, **caractérisé en ce que**, pour configurer le système d'appel d'urgence (1) en différentes positions, une intensité de signal de référence d'un dispositif mobile de référence qui est respectivement détectée par les stations de réception (4-6) est enregistrée avec des données de position du dispositif mobile de référence déterminées par un système global de navigation par satellite.

6. Procédé selon l'une des revendications précédentes, **caractérisé en ce que**, après réception de l'appel d'urgence, la première station de réception (6) transmet au moins l'appel d'urgence, une identification du dispositif mobile (3) et les données de position de la première station de réception et/ou du dispositif mobile (3) à un serveur central (12).

7. Procédé selon l'une des revendications précédentes, **caractérisé en ce que**, pour configurer le système d'appel d'urgence (1) lors de la détermination des intensités du signal de référence en fonction de la position du dispositif mobile de référence, l'une d'une pluralité de stations de réception (4-6) situées dans la plage est présélectionnée pour le déclenchement du signal d'alarme.

8. Procédé selon l'une des revendications précédentes, **caractérisé en ce que**, lors de la mise en place du système d'appel d'urgence (1), des données de position de stations de réception adjacentes sont mémorisées dans les stations de réception (4-6), la première station de réception (6) déclenchant le signal d'alarme elle-même en fonction de la position du dispositif mobile (3) ou transmettant l'appel d'urgence à une seconde station de réception adjacente (4) lorsque la seconde station de réception (4) est plus proche de la position détectée du dispositif mobile (3) que la première station de réception (6) ou de station de réception (4) présélectionnée.

9. Procédé selon l'une des revendications précédentes, **caractérisé en ce que** la station de réception (4-6) respective déclenche une alarme silencieuse ou une alarme forte en fonction de l'appel d'urgence transmis.

10. Procédé selon l'une des revendications précédentes, **caractérisé en ce que** les stations de réception (4-6) balaient leur environnement au moyen de leur module radio (11) respectif afin de détecter les stations de réception voisines (4-6).

11. Procédé selon l'une des revendications précédentes, **caractérisé en ce que** le dispositif mobile (3) lance un enregistrement audio avec l'envoi de l'appel d'urgence et envoie en particulier des paquets de données audio à intervalles réguliers à la première station de réception (6) et/ou à au moins une autre station de réception (4).

12. Procédé selon l'une des revendications précédentes, **caractérisé en ce que** l'appel d'urgence par le dispositif mobile (3) est accompagné d'une identification d'utilisateur ou d'identification de dispositif mobile.

13. Procédé selon l'une des revendications précédentes, **caractérisé en ce qu'**un signal d'alarme n'est déclenché que si l'identification de l'utilisateur ou l'identification du dispositif mobile correspond à une identification d'utilisateur ou de dispositif mobile autorisée enregistrée dans le serveur central (12) ou dans la première station de réception (6).

14. Système d'appel d'urgence (1), en particulier pour exécuter la procédure selon une ou plusieurs des revendications précédentes, comportant au moins un dispositif mobile (3) pour déclencher un appel d'urgence, comportant une pluralité de stations de réception (4-6) pour recevoir l'appel d'urgence, dans laquelle le dispositif mobile comporte un commutateur d'appel d'urgence (8), sur l'actionnement duquel le dispositif mobile (3) transmet l'appel d'urgence à l'une des stations de réception (4-6), les stations de réception (4-6) et le dispositif mobile (3) comportant chacun au moins un module radio (10, 11) à cette fin, **caractérisé en ce que** chaque station de réception (4-6) est conçue comme un routeur et comporte un dispositif d'alarme (14) et une unité de commande (13), le dispositif d'alarme (14) étant conçu pour émettre un signal d'alarme acoustique et/ou visuel, et l'unité de commande (13) déterminant une position du dispositif mobile (3) en fonction d'une intensité du signal d'au moins un des modules radio (10, 11) et émettant un signal d'alarme par un seul des dispositifs d'alarme (14) en fonction de la position déterminée.

15. Système d'appel d'urgence à l'échelle d'une zone selon la revendication 14, **caractérisé en ce que** les modules radio (10, 11) sont conçus comme modules WLAN ou modules Bluetooth.
